# EUROPÄISCHE PATENTANMELDUNG

(11) **EP 2 940 832 A1**
(43) Veröffentlichungstag der Anmeldung: **04.11.2015**
(21) Anmeldenummer: 14166304.7
(22) Anmeldetag: 29.04.2014
(51) Int. Cl.: H02K 1/26, H02K 3/34

(54) **Rotor mit in einem Abschnitt in Umfangsrichtung verkürzter Polschuhe**

(71) Anmelder: HILTI Aktiengesellschaft, 9494 Schaan (LI)
(72) Erfinder: Fritsch, Frank, 86916 Kaufering (DE)
(74) Vertreter: Hilti Aktiengesellschaft Corporate Intellectual Property

(57) **Zusammenfassung**

Rotorpaket zur Verwendung in einer elektromagnetische Maschine, enthaltend wenigstens ein erstes Lamellenblech und ein zweites Lamellenblech mit jeweils einem Ringelement mit einem Mittelpunkt, einer Innenseite und einer Aussenseite; und wenigstens einem an der Aussenseite des Ringelements positionierten Polelement, welches einen sich radial von der Aussenseite erstreckenden Polschenkel mit einer Länge (b) in Umfangsrichtung (R) und einen sich in Umfangsrichtung (R) erstreckenden Polschuh enthält, wobei der Polschuh des ersten Lamellenblechs eine Länge (a) in Umfangsrichtung (R) aufweist, die größer ist als die Breite (b) des Polschenkels. Zum Bilden einer Zugangsöffnung an den Polelementen weist der Polschuh des zweiten Lamellenblechs eine Länge (a/x) in Umfangsrichtung (R) auf, wobei x einen Wert > 1 und a/x einen Wert ≥ b hat.

## Beschreibung

Die vorliegende Erfindung betrifft ein Rotorpaket zur Verwendung in einer elektromagnetische Maschine, enthaltend wenigstens ein erstes Lamellenblech und ein zweites Lamellenblech mit jeweils einem Ringelement mit einem Mittelpunkt, einer Innenseite und einer Aussenseite; und wenigstens einem an der Aussenseite des Ringelements positionierten Polelement, welches einen sich radial von der Aussenseite erstreckenden Polschenkel mit einer Länge in Umfangsrichtung und einen sich in Umfangsrichtung erstreckenden Polschuh enthält, wobei der Polschuh des ersten Lamellenblechs eine Länge in Umfangsrichtung aufweist, die größer ist als die Breite des Polschenkels.

Als Rotor (bzw. Anker oder Läufer), bezeichnet man den beweglichen, rotierenden Teil einer elektromechanischen Maschine und bildet sozusagen das Gegenstück zu einem Stator oder Läufer, dem feststehenden, unbeweglichen Teil einer elektromechanischen Maschine. Bei der elektromechanischen Maschine kann es sich beispielsweise um einen Elektromotor, einen Generator, einen Hydromotor oder eine Pumpe handeln.

Der Stator besteht für gewöhnlich aus einem zylindrischen Blechpaket, welches aus einer Vielzahl an aufeinander gelegten und miteinander verbundenen Blechlamellen gebildet ist. Die Blechlamellen des Stators sind jeweils im Wesentlichen in Form eines Rings ausgebildet. Jedes dieser Ringelemente weist eine gerade Anzahl an Polelementen auf, die sich von der Innenseite des Ringelements in radialer Erstreckung zum Mittelpunkt des Ringelements erstrecken. Zwischen diesen Polelementen befindet sich jeweils eine längliche Nut. Nachdem die einzelnen Blechlamellen zu dem Blechpaket zusammengefügt sind, bilden die einzelnen Polelemente hintereinander gereiht einen länglichen Polschuh zur Aufnahme jeweils einer Spulenwicklung. Die Spulenwicklung dient zur Erzeugung eines Magnetfeldes, welches wiederum den Rotor zum Rotieren bringt und infolgedessen ein Drehmoment erzeugt, welches auf eine im Rotor befindliche Antriebswelle übertragen wird. Das Blechpaket und insbesondere die Nuten werden zwischen den einzelnen Polelementen mit einer Kunststoffschicht zur Isolation gegen die Spulenwicklung ausgespritzt.

Im Inneren des Stators befindet sich der Rotor, welcher auf der Antriebswelle drehbar in dem von den Spulenwicklungen erzeugten Magnetfeld zwischen den Polschuhen des Stators gelagert ist. Der Rotor besteht für gewöhnlich ebenfalls aus einer Vielzahl an aufeinander gelegten und miteinander verbundenen Blechlamellen. Die Blechlamellen des Rotors enthalten eine im Wesentlichen runden Grundkörper mit einer zentralen Aufnahmeöffnung für die Antriebswelle sowie einer Anzahl an Stegen. Die Stege erstrecken sich in radialer Richtung vom Mittelpunkt des Grundkörpers nach aussen. Zwischen den Stegen befindet sich eine Nut zur Aufnahme jeweils eines Permanentmagneten. Mit Hilfe der Permanentmagnete wird der Rotor in Verbindung mit dem Magnetfeld, welches in den Spulenwicklungen erzeugt wird, in Rotation versetzt. Der Rotorkern wird zum Schutz gegen mechanische Einwirkungen mit einer Kunststoffisolationsschicht überzogen.

Ein Rotor gemäss dem Stand der Technik ist in der deutschen Patentanmeldung DE102007047715 gezeigt. In dieser Druckschrift des Stands der Technik wird ein Rotor für eine elektrische Maschine offenbart. Der Rotor enthält dabei eine Rotorwelle, eine drehfest mit der Rotorwelle verbundene Rotornabe sowie mindestens ein auf der Rotornabe montiertes, mit einer Rotorwicklung, Permanentmagneten oder einem Kurzschlusskäfig bestückten Lamellen-oder Rotorblechpaket. Das Lamellen-oder Rotorblechpaket besteht dabei aus einer Vielzahl von aneinander gereihten und miteinander verbundenen Blechlamellen.

Ein **Problem** bei diesen Rotorpaketen des Stands der Technik besteht darin, dass die Kunststoffisolationsschicht zur Vermeidung von Kurzschlüssen an den Spulenwicklungen sowie generell zum Schutz der Spulenwicklungen nicht optimal in den Nuten zwischen/an den Polelementen aufgetragen wird. Optimal bedeutet hierbei, dass diese Kunststoffisolationsschicht weder zu dick noch zu dünn in den Nuten bzw. auf den Spulenwicklungen aufgetragen wird, da ein zu dick aufgetragener Kunststoff eine zu hohe thermische Isolation des Rotorpakets bedeutet und ein zu dünn aufgetragener Kunststoff keine ausreichende Isolationsfestigkeit gewährleistet.

Aufgabe der vorliegenden Erfindung ist es, diese vorstehend beschriebenen Probleme zu lösen und insbesondere eine möglichst optimale Isolation an den Polelementen bzw. an der Außenseite des Rotorpakets zu erreichen.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Hierzu wird ein Rotorpaket bereitgestellt zur Verwendung in einer elektromagnetische Maschine, enthaltend wenigstens ein erstes Lamellenblech und ein zweites Lamellenblech mit jeweils einem Ringelement mit einem Mittelpunkt, einer Innenseite und einer Aussenseite; und wenigstens einem an der Aussenseite des Ringelements positionierten Polelement, welches einen sich radial von der Aussenseite erstreckenden Polschenkel mit einer Länge in Umfangsrichtung und einen sich in Umfangsrichtung erstreckenden Polschuh enthält, wobei der Polschuh des ersten Lamellenblechs eine Länge in Umfangsrichtung aufweist, die größer ist als die Länge des Polschenkels.

Erfindungsgemäß weist zum Bilden einer Zugangsöffnung an den Polelementen der Polschuh des zweiten Lamellenblechs eine Länge a/x in Umfangsrichtung auf, wobei x einen Wert > 1 und a/x einen Wert ≥ b hat. Hierdurch kann ein optimales Auftragen des flüssigen Kunststoffisolationsmaterials in die Nuten und zu den Spulenwicklungen von der Mitte des Rotorpakets sichergestellt werden.

Gemäß einer weiteren vorteilhaften Ausgestaltungsform der vorliegenden Erfindung kann vorgesehen sein, dass wenigstens ein zweites Lamellenblech zwischen mindestens zwei ersten Lamellenblechen angeordnet ist. Hierdurch kann eine geschlossene Zugangsöffnung zwischen den Polelementen gebildet werden, die ein verbessertes Auftragen des flüssigen Kunststoffisolationsmaterials gewährleistet.

Um sicherzustellen, dass die Zugangsöffnung symmetrisch zu bzw. genau in der Mitte von ersten Lamellenblechen positioniert ist, kann vorteilhafterweise vorgesehen sein, dass dieselbe Anzahl an ersten Lamellenblechen in Richtung (K) vor sowie hinter wenigsten einem zweiten Lamellenblech angeordnet ist. Durch das symmetrische Positionieren der Zugangsöffnung kann ein gleichmässiges und damit möglichst optimales Auftragen des flüssigen Kunststoffisolationsmaterials gewährleistet werden.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigt:
- Fig. 1: eine perspektivische Ansicht eines erfindungsgemäßen Rotorpakets bestehend aus einer Vielzahl an einzelnen, hintereinander gereihten und miteinander verbundenen ersten und zweiten Lamellenblechen;
- Fig. 2: eine Seitenansicht auf das erfindungsgemäße Rotorpaket bestehend aus einer Vielzahl an einzelnen, hintereinander gereihten und miteinander verbundenen ersten und zweiten Lamellenblechen;
- Fig. 3: eine Vorderansicht auf ein erstes Lamellenblech;
- Fig. 4: eine Vorderansicht auf ein zweites Lamellenblech
- Fig. 5: eine Draufsicht auf das erfindungsgemäße Rotorpaket bestehend aus ersten Lamellenblechen und zweiten Lamellenblechen; und
- Fig. 6: eine Schnittansicht auf das erfindungsgemäße Rotorpaket bestehend aus hintereinander angeordneten ersten und zweiten Lamellenblechen entlang der Schnittlinie A - A in Fig. 2 bzw. Fig. 5.

### Ausführungsbeispiel:

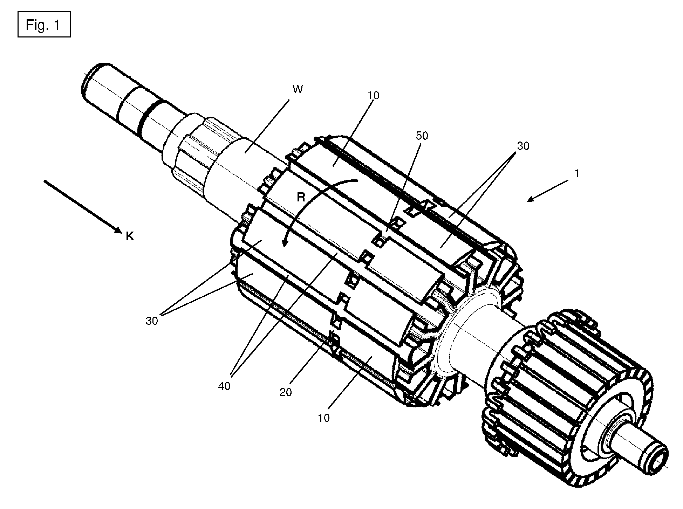

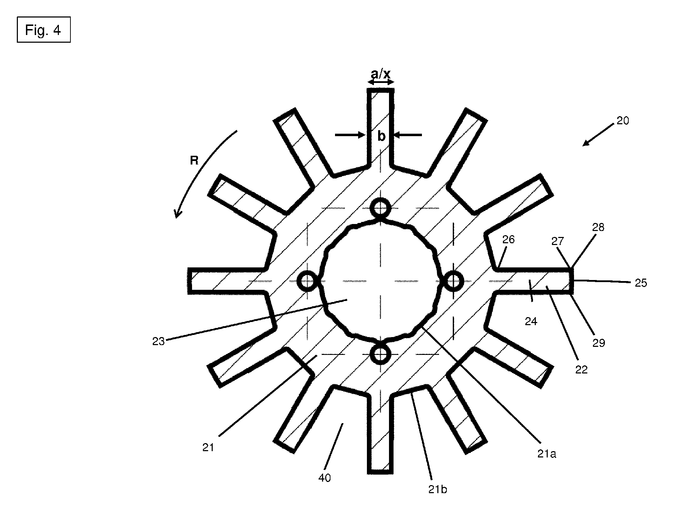

Fig. 1 und 4 zeigt ein erfindungsgemäßes Rotorpaket 1 zur Verwendung in einer (nicht gezeigten) elektromagnetischen Maschine. Bei der elektromagnetischen Maschine kann es sich um einen Elektromotor handeln.

Das Rotorpaket 1 enthält im Wesentlichen ein erstes Lamellenblech 10 und ein zweites Lamellenblech 20. Das erste Lamellenblech 10 enthält ein Ringelement 11 mit zwölf identischen Polelementen 12. Darüber hinaus enthält das zweite Lamellenblech 20 ein Ringelement 21 mit zwölf identischen Polelementen 22.

Das Ringelement 11 enthält eine kreisförmige Innenseite 11a, eine kreisförmige Außenseite 11 b sowie eine zentrische, kreisförmige Aufnahmeöffnung 13. Des Weiteren enthält das Ringelement 21 eine kreisförmige Innenseite 21 a, eine kreisförmige Außenseite 21 b sowie eine zentrische, kreisförmige Aufnahmeöffnung 23. Die Aufnahmeöffnung 13 und die Aufnahmeöffnung 23 dient jeweils zur drehfesten Aufnahme einer Antriebswelle W, mit der ein im Elektromotor erzeugtes Drehmoment auf weitere (ebenfalls nicht gezeigte) Bauteile übertragen werden kann.

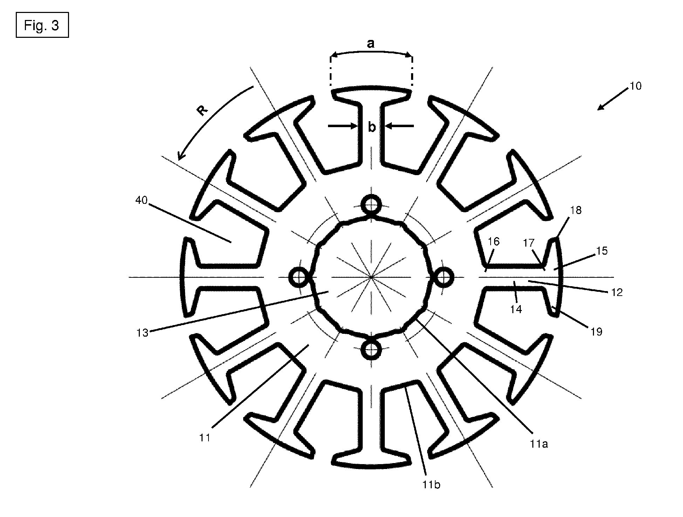

Jedes der Polelemente 12 des Ringelements 11 enthält wiederum jeweils einen Polschenkel 14 und einen länglichen Polschuh 15. Jeder Polschenkel 14 enthält jeweils ein erstes Ende 16 und ein zweites Ende 17. Das erste Ende 16 jedes Polschenkels 14 ist so an der Außenseite 11a des Ringelements 11 positioniert, dass die zwölf Polelemente 12 in gleichmäßigen Abständen zueinander radial verteilt an der Außenseite 11 b des Ringelements 11 angeordnet sind. Wie in Fig. 3 dargestellt, beträgt die Breite eines jeden Polschenkels 14 in Umfangrichtung R einen Wert b. Im vorliegenden Ausführungsbeispiel beträgt die Breite des Polschenkels 3 mm. An dem zweiten Ende 17 ist jeweils der Polschuh 15 positioniert. Der Polschuh 15 ist dabei in Umfangrichtung R in länglicher Ausrichtung angeordnet. Wie ebenfalls in Fig. 3 gezeigt, enthält jeder Polschuh 15 jeweils ein erstes Ende 18 und ein zweites Ende 19.

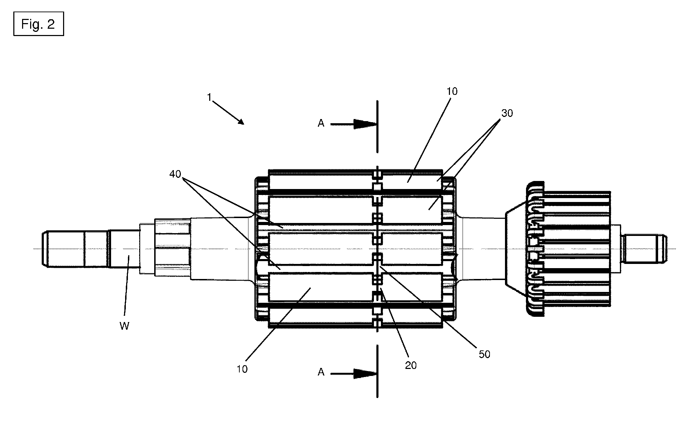

Jedes der Polelemente 22 des Ringelements 21 enthält wiederum jeweils einen Polschenkel 24 und einen länglichen Polschuh 25. Jeder Polschenkel 24 enthält jeweils ein erstes Ende 26 und ein zweites Ende 27. Das erste Ende 26 jedes Polschenkels 24 ist so an der Außenseite 21a des Ringelements 21 positioniert, dass die zwölf Polelemente 22 in gleichmäßigen Abständen zueinander radial verteilt an der Außenseite 21 b des Ringelements 21 angeordnet sind. Wie in Fig. 4 dargestellt, beträgt die Breite eines jeden Polschenkels 24 in Umfangrichtung R einen Wert b. Im vorliegenden Ausführungsbeispiel beträgt die Breite des Polschenkels 1 mm. An dem zweiten Ende 27 ist jeweils der Polschuh 25 positioniert. Der Polschuh 25 ist dabei in Umfangrichtung R in länglicher Ausrichtung angeordnet. Wie in Fig. 2 gezeigt, enthält jeder Polschuh 25 jeweils ein erstes Ende 28 und ein zweites Ende 29. Gemäß dem in Fig. 4 gezeigten Ausführungsbeispiel weist das zweite Lamellenblech 20 Polschenkel 24 auf, deren Breite b gleich der Länge des Polschuhs 25 sind. Gemäß anderen nicht gezeigten Ausführungsbeispielen, kann jedoch die Länge des Polschuhs 25 größer sein als die Breite des Polschenkels 24.

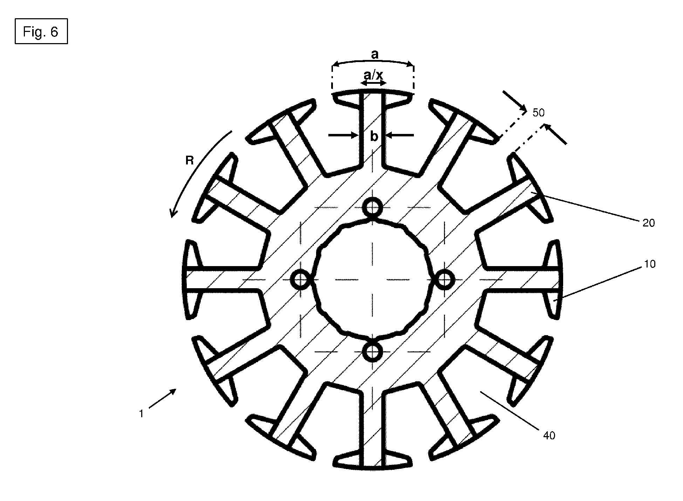

Wie bereits vorstehend beschrieben, beträgt die Länge des Polschuhs 15 des ersten Lamellenblechs 10 in Umfangrichtung R bzw. der Abstand zwischen dem ersten Ende 18 und dem zweiten Ende 19 beträgt den Wert a. Des Weiteren beträgt die Länge des Polschuhs 25 des zweiten Lamellenblechs 20 in Umfangrichtung R bzw. der Abstand zwischen dem ersten Ende 28 und dem zweiten Ende 29 den Wert a/x. Der Wert x ist dabei größer (>) als 1. Mit anderen Worten, die Länge des Polschuhs 25 des zweiten Lamellenblechs 20 beträgt in Umfangrichtung R nur einen Anteil der Länge des Polschuhs 15 des ersten Lamellenblechs 10. Gemäß dem in Fig. 3, 4 und 6 gezeigten Ausführungsbeispiel beträgt die Länge des Polschuhs 25 des zweiten Lamellenblechs 20 in Umfangrichtung R ein Drittel (1/3) der Länge des Polschuhs 15 des ersten Lamellenblechs 10 in Umfangrichtung R. Somit beträgt die Länge jedes Polschuhs 25 des zweiten Lamellenblechs 20 drei Millimeter (3 mm) und die Länge des Polschuhs 15 des ersten Lamellenblechs 10 neun Millimeter (9 mm).

Zum Erstellen des in Fig. 1, 2 und 5 gezeigten erfindungsgemäßen Rotorpakets 1 werden die ersten Lamellenblech 10 und die zweiten Lamellenbleche 20 hintereinander positioniert und entsprechend miteinander verbunden (vgl. Fig. 1, 3 und 4). Die Lamellenbleche 10, 20 können dabei miteinander verklebt werden. Die ersten Lamellenbleche 10 und zweiten Lamellenbleche 20 werden so zueinander positioniert, dass die jeweiligen Polelemente 12, 22 zueinander (bzw. hintereinander) ausgerichtet sind. Durch diese Ausrichtung der Polelemente 12, 22 entstehen zwölf durchgehende Stege 30 (vgl. Fig. 1, 2, 5 und 6). Zwischen zwei dieser Stege 30, die durch die Polelemente 12, 22 gebildet sind, befindet sich jeweils eine durchgehende Nut 40 (vgl. ebenfalls Fig. 1, 2, 5 und 6).

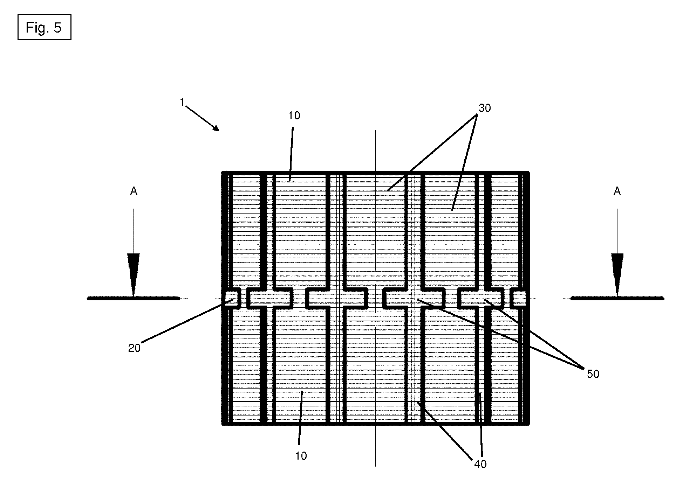

Wie insbesondere in den Fig. 1 und 3 zu erkennen ist, besteht das erfindungsgemäße Rotorpaket 1 aus ersten Lamellenblechen 10 und zweiten Lamellenblechen 20. Die Mehrzahl bilden die ersten Lamellenbleche 10. Die zweiten Lamellenbleche 20 sind zwischen den ersten Lamellenblechen 10 positioniert. Wie in Fig. 5 gezeigt, befinden sich vier zweite Lamellenbleche 20 zwischen 52 ersten Lamellenblechen. Es ist jedoch auch möglich, dass das Verhältnis von ersten Lamellenblechen und zweiten Lamellenblechen variiert. Mit anderen Worten, es kann auch mehr zweite Lamellenbleche und/oder weniger erste Lamellenbleche verwendet werden zur Bildung eines erfindungsgemäßen Rotorpakets. Darüber hinaus ist es auch möglich, dass weniger zweite Lamellenbleche und/oder mehr erste Lamellenbleche verwendet werden zur Bildung eines erfindungsgemäßen Rotorpakets.

Durch die unterschiedlichen Längen der Polschuhe 15, 25 bildet sich eine entsprechende Zugangsöffnung 50 an den Polelementen 12, 22. Diese Zugangsöffnung 50 dient als Einlassöffnung zum Einbringen eines (nicht gezeigten) flüssigen Kunststoffisolationsmaterials in die Nut 40 zwischen den Stegen 30 der Polelemente 12, 22.

## Patentansprüche

1. Rotorpaket (1) zur Verwendung in einer elektromagnetische Maschine, enthaltend wenigstens ein erstes Lamellenblech (11) und ein zweites Lamellenblech (21) mit jeweils
- einem Ringelement (11, 21) mit einer Innenseite (11a, 21a) und einer Aussenseite (11 b, 21 b); und
- wenigstens einem an der Aussenseite (11b, 21 b) des Ringelements (11, 21) positionierten Polelement (12, 22), welches einen sich radial von der Aussenseite (11b, 21 b) erstreckenden Polschenkel (14, 24) mit einer Länge (b) in Umfangsrichtung (R) und einen sich in Umfangsrichtung (R) erstreckenden Polschuh (15, 25) enthält, wobei der Polschuh (15) des ersten Lamellenblechs (10) eine Länge (a) in Umfangsrichtung (R) aufweist, die größer ist als die Breite (b) des Polschenkels (14, 24),
**dadurch gekennzeichnet, dass** zum Bilden einer Zugangsöffnung an den Polelementen (11, 21) der Polschuh (25) des zweiten Lamellenblechs (20) eine Länge (a/x) in Umfangsrichtung (R) aufweist, wobei x einen Wert > 1 und a/x einen Wert ≥ b hat.

2. Rotorpaket (1) nach Anspruch 1,
**dadurch gekennzeichnet, dass** wenigstens ein zweites Lamellenblech (20) zwischen mindestens zwei ersten Lamellenblechen (10) angeordnet ist.

3. Rotorpaket (1) nach Anspruch 1 oder 2,
**dadurch gekennzeichnet, dass** dieselbe Anzahl an ersten Lamellenblechen (10) in Richtung (K) vor sowie hinter wenigsten einem zweiten Lamellenblech (20) angeordnet ist.
